# EUROPÄISCHE PATENTSCHRIFT

(11) **EP 2 907 617 B1**
(45) Veröffentlichungstag und Bekanntmachung des Hinweises auf die Patenterteilung: **06.12.2017**
(21) Anmeldenummer: 15155300.5
(22) Anmeldetag: 16.02.2015
(51) Int. Cl.: B23Q 11/00, B23Q 11/08, E04G 5/06, F16P 1/02

(54) **Werkzeugmaschine**
Machine tool
Machine-outil

(30) Priorität: 14.02.2014 AT 501142014
(43) Veröffentlichungstag der Anmeldung: 19.08.2015
(73) Patentinhaber: WFL Millturn Technologies GmbH & Co. KG, 4030 Linz (AT)
(72) Erfinder: Maringer, Herbert, 4642 Sattledt (AT)
(74) Vertreter: Jell, Friedrich

(56) Entgegenhaltungen:
- CN-U- 201 950 510
- DE-A1- 2 352 934
- DE-U1- 9 103 963
- DE-U1- 9 202 074

## Beschreibung

Die Erfindung betrifft eine Werkzeugmaschine zur Bearbeitung eines Werkstücks mit einem Arbeitsraum zur Aufnahme des zu bearbeitenden Werkstücks, mit einem Maschinenbett und mit mindestens einer Schutzabtrennung, die den Arbeitsraum zumindest bereichsweise begrenzt und wenigstens eine verschließbare Zugangsöffnung zum Arbeitsraum aufweist, und mit mindestens einem im Arbeitsraum vorgesehenen Trittboden, der mindestens ein im Arbeitsraum bewegliches Trittelement aufweist.

Werkzeugmaschinen mit öffenbaren Schutzabtrennungen zum Betreten des Arbeitsraums sind bekannt. So beschreibt die DE 9202074 U1 zu einer Schutzabtrennung ein aufschwenkbares Wandelement, um eine Zugangsöffnung zum Arbeitsraum zu schaffen. Dieses Wandelement ist auch mit einem Bodenelement im Arbeitsraum verbunden, das als Bodenrost oder Bodengitter ausgeführt sein kann. Beim Öffnen der Schutzabtrennung werden nun Wand- und Bodenelement gemeinsam bewegt, was eine unterhalb des Bodenelements vorgesehene Sammelwanne für Kühlschmiermittel freigibt. Soll der Arbeitsraum beispielsweise für eine Inspektion des Werkstücks betreten werden, stellt die beispielsweise durch das aufgefangene Kühlschmiermittel nasse Sammelwanne nachteilig eine erhebliche Verletzungsgefahr für ein Bedienpersonal der Werkzeugmaschine dar.

Der Erfindung liegt somit die Aufgabe zugrunde, ausgehend vom eingangs geschilderten Stand der Technik, eine Werkzeugmaschine zu schaffen, die ausgehend von einer öffenbaren Schutzabtrennung ein gefahrenloses Betreten dessen Arbeitsraums gewährleisten kann.

Die Erfindung löst die gestellte Aufgabe dadurch, dass sich der Trittboden vom Boden der Zugangsöffnung ausgehend im Arbeitsraum erstreckt und über dessen bewegliches Trittelement von einer zurückgezogenen Ruhelage in eine dazu weiter in den Arbeitsraum vorstehende Sicherungslage verlagerbar ist.

Erstreckt sich der Trittboden vom Boden der Zugangsöffnung ausgehend im Arbeitsraum und ist über dessen bewegliches Trittelement von einer zurückgezogenen Ruhelage in eine dazu weiter in den Arbeitsraum vorstehende Sicherungslage verlagerbar, kann ein sicheres Betreten weiter Teile des Arbeitsraums sichergestellt werden. Selbst bei Werkzeugmaschinen mit vergleichsweise tiefen Arbeitsräumen, wie sich diese aufgrund vergleichsweiser durchmessergroßer Werkstücke ergeben können, kann der erfindungsgemäße Trittboden für eine ausreichende Sicherung des Bedienpersonals sorgen, weil der Trittboden durch sein bewegliches Trittelement stets die geforderte Sicherungslage im Arbeitsraum einnehmen kann. Zudem kann der erfindungsgemäße Trittboden einer Werkstückkontur folgen und damit dem Bearbeitungsfortschritt des Werkstücks folgende Sicherungslagen im Arbeitsraum einnehmen. Dabei kann die zurückgezogene Ruhelage konstruktiv so gewählt werden, dass Werkstücke maximaler Größe im Arbeitsraum erreicht werden können und zugleich die Beweglichkeit der Werkzeuge bzw. der Werkzeughalterung nicht eingeschränkt werden. Beispielsweise in dem sich das bewegliche Trittbrett in seiner zurückgezogenen Ruhelage außerhalb des maximalen Umlaufdurchmessers über dem Maschinenbett, insbesondere außerhalb des maximal spannbaren Werkstückdurchmessers, befindet. Eine Werkzeugmaschine mit einem derart flexiblen Trittboden kann daher nicht nur zu einem sicheren Betreten des Arbeitsraums, sondern auch zu keinen Beschränkungen an der Werkzeugmaschine führen.

Kragt der Trittboden in den Arbeitsraum aus, kann der nicht nutzbare Raum des Arbeitsraums klein gehalten und damit eine Beschränkung des Bewegungsraums vermieden werden. Außerdem können die unter dem auskragenden Trittboden vorgesehenen Freiräume für Wartungszwecke an der Werkzeugmaschine genützt werden, was deren Handhabung vereinfachen kann.

Ein standfester Übergang zwischen Boden der Zugangsöffnung und Trittboden kann gewährleistet werden, wenn sich der Trittboden vom Boden der Zugangsöffnung mit mindestens einem ortsfesten Trittelement ausgehend im Arbeitsraum erstreckt. An dieses ortsfesten Trittelement kann dann das beweglichen Trittelement anschließen, um die im Arbeitsraum tiefere Sicherungslage ausbilden zu können.

Weist die Werkzeugmaschine vor der Zugangsöffnung in den Arbeitsraum ein Podest mit einem Träger auf, an dem der Trittboden befestigt ist, können damit die durch die Begehung des Trittbodens entstehenden Kräfte über das Podest in ein Fundament abgeleitet werden. Konstruktiv einfachere Werkzeugmaschinen können so realisiert werden.

Ist das ortsfeste Trittelement an dessen in den Arbeitsraum einragenden Ende über eine Abstützung mit dem Podest verbunden, können selbst weit in den Arbeitsraum auskragende Sicherungslagen des Trittbodens standfest ermöglicht werden. Die Erfindung kann damit selbst bei vergleichsweise tiefen Arbeitsräumen zur Aufnahme größer Werkstückdurchmesser verwendet werden.

Die Verlagerung des Trittelements von seiner Ruhelage in seine Sicherungslage kann konstruktiv einfach gelöst werden, indem der Trittboden eine Führung mit Führungselementen aufweist, an denen das erste bewegliche Trittelement zu dessen Verlagerung befestigt ist. Eine Linearführung, vorzugsweise Schwalbenschwanzführung, kann beispielsweise solch eine konstruktiv einfache Führung darstellen, um das Trittelement standfest gerade vor- und zurückführen zu können.

Die Führung für das erste bewegliche Trittelement kann gegenüber einer Verschmutzung geschützt werden, in dem diese unterhalb eines ortsfesten Trittelements des Trittbodens vorgesehen ist. Zudem kann damit auch das erste bewegliche Trittelement in seiner Ruhelage unter dem anderen ortsfesten Trittelement vor Verschmutzung geschützt werden, was ein gefahrenfreies Begehen des ersten beweglichen Trittelements in seiner Sicherungslage sicherstellen kann.

Konstruktive Vereinfachungen an der Werkzeugmaschine können sich ergeben, wenn dass sowohl die Führung mit ihrem ortsfesten Führungselement als auch das zweite Trittelement über zumindest ein gemeinsames Tragprofil am Podest befestigt sind. Zudem kann damit ein besonders mechanisch belastbarer Trittboden geschaffen werden.

Die Verlagerung des Trittelements von seiner Ruhelage in seine Sicherungslage kann außerdem dadurch gelöst werden, dass der Trittboden ein erstes Schwenklager aufweist, an das ein zweites bewegliches Trittelement zu dessen Verlagerung befestigt ist. Zudem kann damit der unterhalb des Trittbodens befindliche Arbeitsraum für die Ruhelage des zweiten Trittelements genützt werden. Zudem kann ein Schwenklager eine gegenüber Verunreinigungen robustes Lager darstellen, um das Trittelement standfest auf- und zurückschwenken zu können.

Der Trittboden kann außerdem konstruktiv einfach gelöst mehrere alternativ zueinander bewegliche Trittelemente aufweisen, in dem das erste Schwenklager zwischen dem ersten beweglichen Trittelement und dem zweiten beweglichen Trittelement vorgesehen ist.

Die Konstruktionsverhältnisse zur Absturzsicherung an der Werkzeugmaschine können weiter vereinfacht werden, wenn die Werkzeugmaschine entlang deren Längsrichtung eine Schlittenführung aufweist und wenn der Trittboden einen an der Schlittenführung geführten Schlitten aufweist, an dem das bewegliche Trittelement befestigt ist. Über diesen Schlitten können nämlich je nach Bedarf das bzw. die beweglichen Trittelemente angestellt bzw. positioniert werden, was ein Vorsehen einer Vielzahl von Trittelementen bzw. vergleichsweise breiten Trittelementen vermeiden kann. Insbesondere bei breiten und/oder bei mehreren Zugangsöffnungen zum Arbeitsraum kann solch eine bedarfsentsprechende Absicherung zu einer erheblichen Konstruktionsvereinfachung an der Werkzeugmaschine führen.

Die Unfallgefahr kann weiter vermindert werden, in dem der Trittboden ein Geländer aufweist, das am beweglichen ersten Trittelement über mindestens ein zweites Schwenklager befestigt ist. Das Geländer kann nämlich in seiner eingezogenen Position einen barrierefreien Arbeitsraum für das Werkstück und/oder den Werkzeughalter erlauben, wohingegen dieses in seiner ausgeschwenkten Position den Zugang zum Werkstück erhöht sichern kann.

Die Flexibilität der Werkzeugmaschine bei gleichzeitig hohen Sicherheitsanforderungen kann weiter verbessert werden, wenn das Geländer einen vorne am beweglichen ersten Trittelement mittig gelagerten Geländerträger und davon seitlich abstehende und längenverstellbare Handläufe zur Ausbildung einer vorderen Absturzsicherung aufweist. Zudem kann damit die mechanische Belastbarkeit des Geländers erhöht werden. Mit einer erhöhten Sicherheit im Betreten des Arbeitsraums ist zu rechnen.

Alternativ kann ein Geländer auch ausgebildet werden, wenn das Geländer (24) einen vorne am beweglichen ersten Trittelement seitlich gelagerten Geländerträger und mindestens einen davon seitlich abstehenden und längenverstellbaren Handlauf zur Ausbildung einer vorderen Absturzsicherung aufweist. Dieser Handlauf kann zudem über ein biegeweiches Zugelement mit einem Steher, der am Schlitten befestigt ist, verbunden werden und so neben einer vorderen Absturzsicherung auch zur Ausbildung einer seitlichen Absturzsicherung beitragen.

Bilden mehrere nebeneinander angeordnete Trittböden einen segmentierten Boden im Arbeitsraum aus, kann unterschiedlichsten Geometrien von eingespannten Werkstücken gefolgt und damit der Zugang zum Werkstück verbessert werden.

Sind die Geländer der nebeneinander angeordneten Trittböden über biegeweiche Zugelemente verbunden, kann die Sicherheit im Arbeitsbereich der Werkzeugmaschiene weiter erhöht werden. Die biegeweichen Zugelemente können nämlich seitliche Öffnungen, die sich zwischen den segmentierten Böden ergeben, absichern.

In den Figuren ist beispielsweise der Erfindungsgegenstand anhand mehrerer Ausführungsbeispiele näher dargestellt. Es zeigen
- Fig. 1: eine Schnittansicht durch eine teilweise dargestellte Werkzeugmaschine mit einem Trittboden in einer ersten Ausführungsform,
- Fig. 2: eine vergrößerte Ansicht auf den nach Fig. 1 dargestellten Trittboden in zurückgezogener Ruhelage,
- Fig. 3: den nach Fig. 2 dargestellten Trittboden in dessen Sicherungslage,
- Fig. 4: den Trittboden der Fig. 1 in Vorderansicht,
- Fig. 5: eine vergrößerte Teilansicht der Fig. 4,
- Fig. 6: eine Draufsicht auf den Trittboden nach Fig. 1,
- Fig. 7: die nach Fig. 1 dargestellte Werkzeugmaschine mit einem Trittboden in einer zweiten Ausführungsform und
- Fig. 8: den nach Fig. 7 dargestellten Trittboden in dessen Sicherungslage.

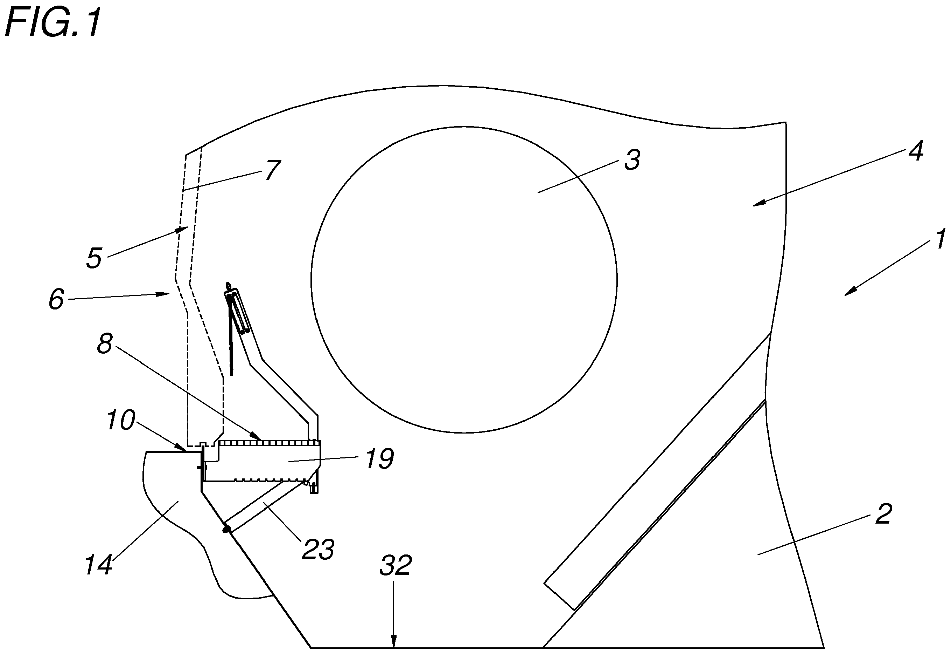

Gemäß Fig. 1 ist beispielsweise eine Werkzeugmaschine 1 mit einem Maschinenbett 2 dargestellt. Die Bearbeitung des Werkstücks 3 erfolgt im Arbeitsraum 4 der Werkzeugmaschine 1, welcher Arbeitsraum 4 mit einer Schutzabtrennung 5 bereichsweise abgesichert ist. Die Schutzabtrennung 5 weist eine verschließbare Zugangsöffnung 6 auf, die von einem linear geführten Schiebeelement 7 der Schutzabtrennung 5 ausgebildet wird. Im Allgemeinen wird erwähnt, dass jegliche Konstruktion zur Ausbildung einer verschließbaren Zugangsöffnung 6 denkbar ist, auch beispielsweise eine nicht näher dargestellte Schwenktür oder auch Teleskoptüren bzw. -schiebetüren.

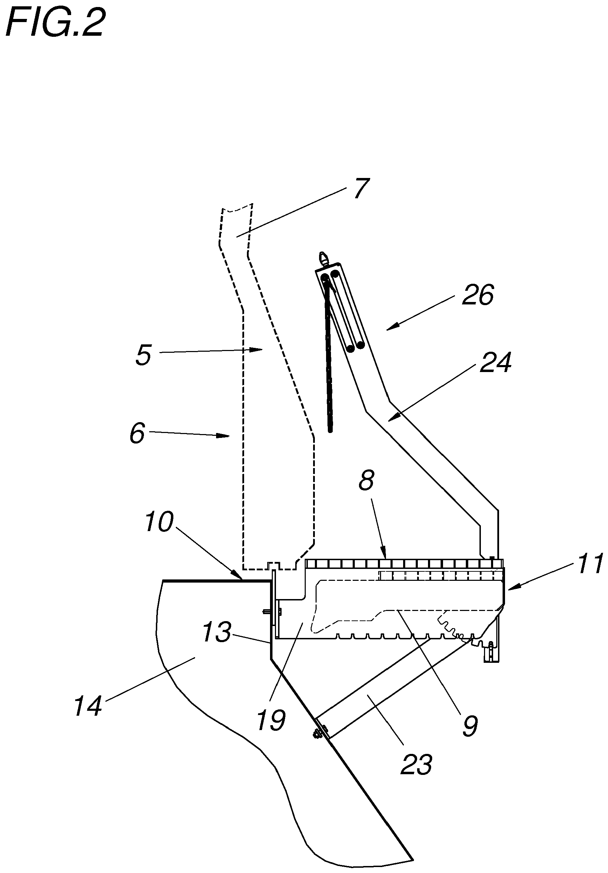

Über diese Zugangsöffnung 6 ist der Arbeitsraum 4 betretbar, wobei hierfür ein Trittboden 8 in einer ersten Ausführungsform nach Fig. 1 vorgesehen ist. Dieser Trittboden 8 weist ein im Arbeitsraum 4 bewegliches Trittelement 9 auf, wie dies in der Fig. 2, strichliert dargestellt, erkannt werden kann. Erfindungsgemäß gewährleistet der Trittboden 8 stets einen sicheren Zugang zum Arbeitsraum 4 der Werkzeugmaschine 1. Hierfür erstreckt sich der Trittboden 8 vom Boden 10 der Zugangsöffnung 6 ausgehend im Arbeitsraum 4. Zudem ist der Trittboden 8 über dessen bewegliches Trittelement 9 von einer zurückgezogenen Ruhelage, wie in Fig. 2 dargestellt, in eine dazu weiter in den Arbeitsraum 4 vorstehende Sicherungslage 12 verlagerbar, sodass der Arbeitsraum 4 selbst bei einem tiefen Maschinenbett 2 mit großem Umlaufdurchmesser sicher betreten werden kann. Zudem beschränkt dieser Trittboden 8 den Arbeitsraum 4 keineswegs, und erlaubt selbst den Zugang zu einem kleinen Werkstück 3 bzw. Werkstückabschnitten geringeren Durchmessers.

Wie in Figuren 1 und 2 weiter erkennbar, kragt der Trittboden 8 in den Arbeitsraum 4 aus. Dies hält den Arbeitsraum 4 so weit wie möglich frei von Konstruktionselementen des Trittbodens 8 und vermeidet unter anderem dort eine unerwünschte Ansammlung von Spänen.

Hohe mechanische Stabilität des auskragenden Trittbodens 8 wird mit einer Befestigung an einem Träger 13 des Podests 14 erreicht. Das Podest 14 ist der Werkzeugmaschine 1 vorgelagert und ist mit dem Maschinenbett 2 verbunden bzw. als Teil des Maschinenbetts 2 ausgeführt. Das vor der Zugangsöffnung 6 vorgesehene Podest 14 verbessert auch den barrierefreien Zugang in den Arbeitsraum 4.

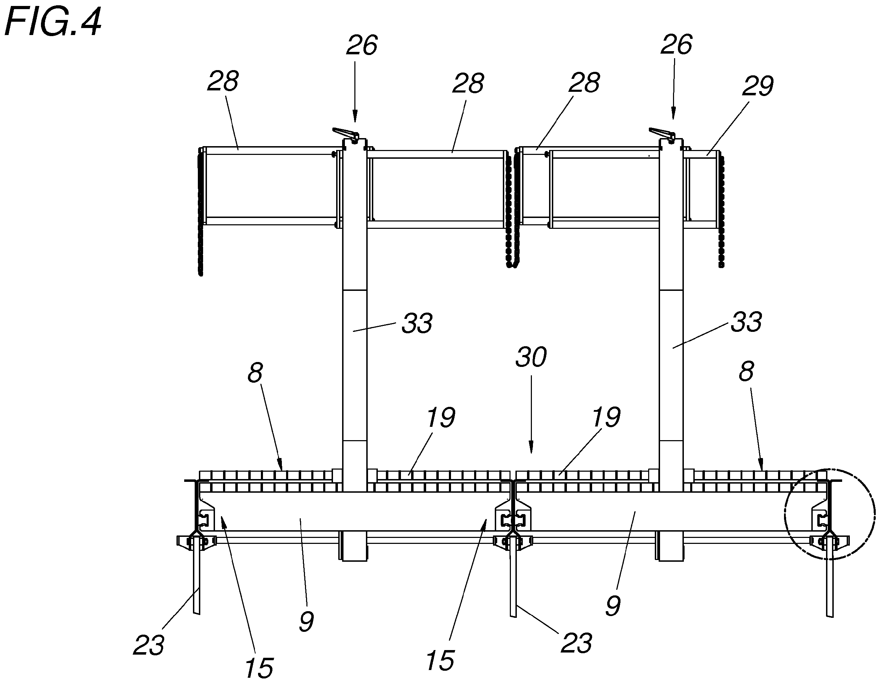

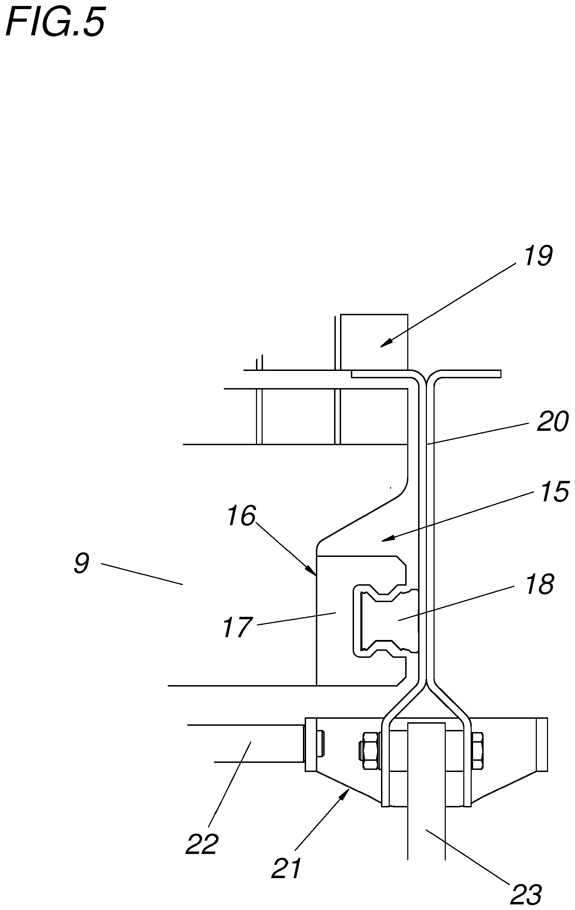

Fig. 4 zeigt die Vorderansicht des erfindungsgemäßen Trittbodens 8 und davon Fig. 5 einen vergrößerten Ausschnitt. Wie in diesen Figuren 4 und 5 zu erkennen, erfolgt die Verlagerung des beweglichen Trittelements 9 entlang einer Führung 15, nämlich einer Linearführung mit zwei parallelen Führungsbahnen 16. Jede Führungsbahn 16 weist ein bewegliches Führungselement 17 und ein dazu ortsfestes Führungselement 18 auf. Das bewegliche Führungselement 17 der Führung 15 ist mit dem beweglichen Trittelement 9 und das ortsfeste Führungselement 18 mit dem ortsfesten Trittelement 19 fest verbunden, das an die Zugangsöffnung 6 anschließt. Ein konstruktiv einfacher, gerade vor- und zurückführbarer Trittboden 8 ist so geschaffen.

Zudem ist damit das bewegliche erste Trittelement 9 unterhalb des ortsfesten Trittelements 19 des Trittbodens 8 vorgesehen. In der Ruhelage des beweglichen Trittelements 9 ist dieses vollständig unter dem ortsfesten Trittelement 19 angeordnet und damit gemeinsam mit der Führung 15 gegenüber Verschmutzung geschützt.

Nach Fig. 5 ist ein Tragprofil 20 zu erkennen, über das das ortsfeste Führungselement 18 und das zweite ortsfeste Trittelement 19 am Podest 14 befestigt sind. Zudem sind die beiden Führungsbahnen 16 an ihrem in den Arbeitsraum 4 auskragenden Ende 21 durch eine Querstrebe 22 miteinander verbunden, was eine stabile und mechanisch belastbare Führung 15 gewährleistet. Diese Vorteile werden durch Abstützungen 23 verbessert, die je ein in den Arbeitsraum 4 auskragendes Ende 21 einer Führungsbahn 16 mit dem Podest 14 verbinden. Erhöhte Gewichtsbelastungen eines in der Sicherungslage weit in den Arbeitsraum 4 einragenden, beweglichen Trittelements 9 können so standfest aufgenommen und abgetragen werden.

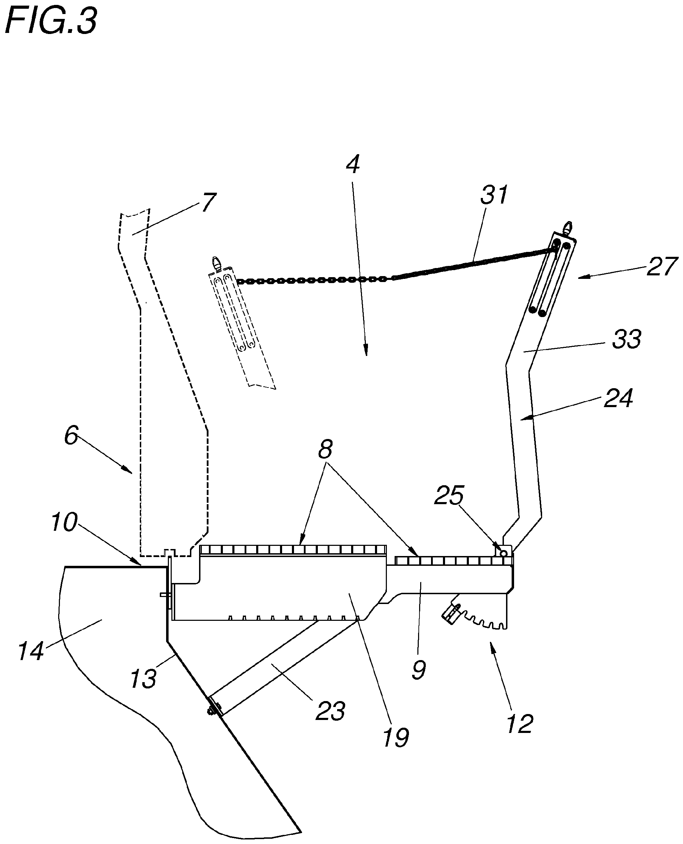

Der Trittboden 8 weist zudem ein Geländer 24 auf, das am vordersten beweglichen Trittelement 9 über ein zweites Schwenklager 25 befestigt ist. In Fig. 2 ist das Geländer 24 in seiner eingezogenen Position 26 dargestellt. So entsteht ein äußerst freier Arbeitsraum 4 für Werkstück 3 und/oder Werkzeughalter, dennoch besteht eine ausreichende Absturzsicherung. Die ausgeschwenkte Position 27 des Geländers 24 ist gemäß Fig. 3 gezeigt, was einen Zugang näher zum Werkstück 3 ermöglicht.

Im Allgemeinen wird festgehalten, dass sowohl Trittboden 8 als auch das Geländer 24 mehrere Zwischenstellungen aufweisen können, was nicht näher dargestellt worden ist. Diese Zwischenstellungen ermöglichen beispielsweise den verschiedenen Geometrien am Werkstück 3 zu folgen, um damit nicht nur den Zugang zu erleichtern, sondern auch für eine verlässliche Arbeitssicherheit zu sorgen.

Nach Fig. 4 sind mehrere Handläufe 28, 29 der Geländer 24 in unterschiedlichen Ausziehlagen dargestellt. So sind beispielsweise die Handläufe 28 vollständig ausgezogen, hingehend sind die Handläufe 29 beinahe vollständig eingefahren. Die Handläufe 28, 29 stehen einem vorne am beweglichen Trittelement 9 mittig gelagerten Geländerträger 33 des jeweiligen Geländers 24 seitlich ab. Der Geländerträger 33 ist über das zweite Schwenklager 25 mit dem Trittelement 9 verbunden.

Mithilfe der Handläufe 28, 29 kann, falls notwendig, ein barrierefreier Zugang zum Werkstück 3 geschaffen werden. Durch diese längenverstellbaren Handläufe 28, 29 ist die Variabilität des Trittbodens 8 weiter erhöht und auch eine vordere Absturzsicherung geschaffen.

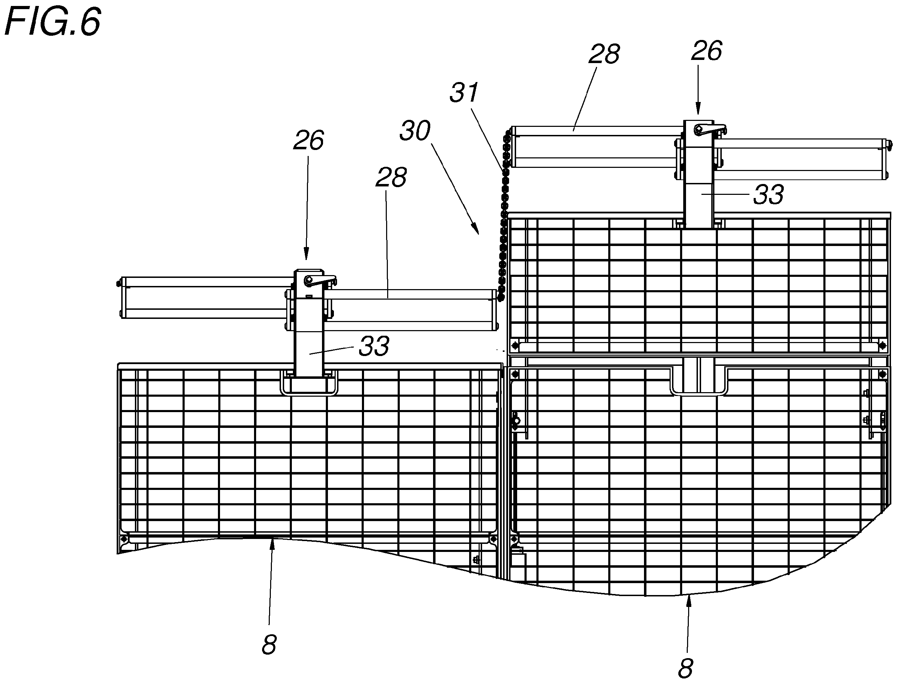

Durch eine in den Figuren 4 und 6 dargestellte Anordnung mehrerer erfindungsgemäßer Trittböden 8 nebeneinander wird ein segmentierter Boden 30 im Arbeitsraum 4 gebildet. Dieser Boden 30 ist äußerst variabel an die jeweiligen Gegebenheiten im Arbeitsraum 4 anpassbar. Wie Fig. 4 weiter zu entnehmen ist, sind die Handläufe 29, 28 der Geländer 24 der nebeneinander angeordneten Trittböden 8 über biegeweiche Zugelemente 31, nämlich Ketten, verbunden. Dies vermeidet Öffnungen zwischen den Trittböden 8 und erhöht die Sicherheit im Arbeitsraum 4 der Werkzeugmaschine 1 weiter.

Im Allgemeinen wird erwähnt, dass sich der Trittboden 8 in seiner Sicherungslage 12 über dem Maschinenbettboden 32 des Maschinenbetts 2 erstreckt, wie dies der Fig. 1 entnommen werden kann.

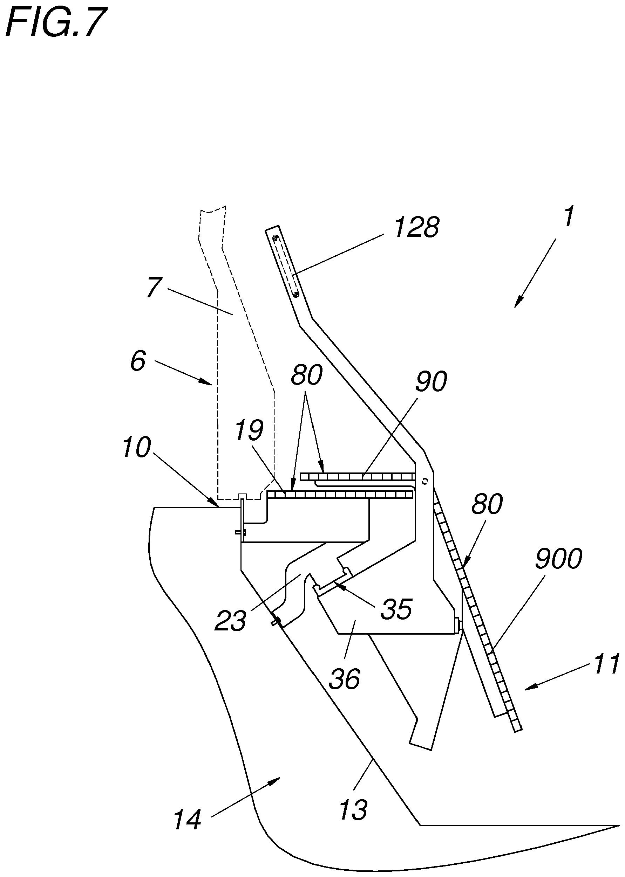

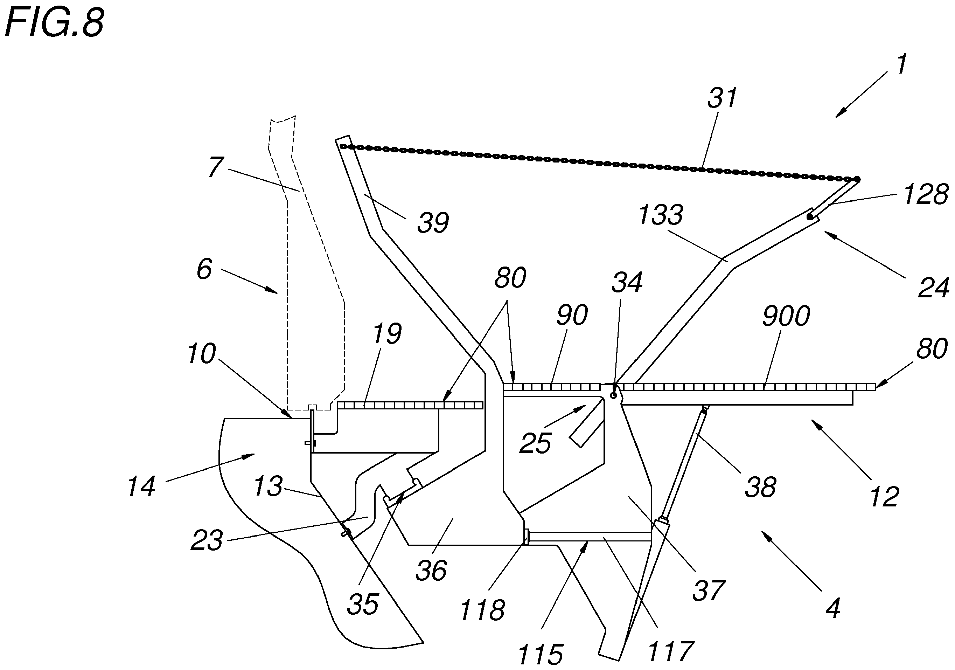

In den Figuren 7 und 8 ist ein zum Trittboden 8 nach den Figuren 1 bis 6 alternativ ausgeführter Trittboden 80 dargestellt. Dieser Trittboden 80 weist ein Schwenklager 34 auf, über das ein zweites bewegliches Trittelement 900 von einer zurückgezogenen Ruhelage 11 in eine dazu weiter in den Arbeitsraum 4 vorstehende Sicherungslage 12 verlagerbar ist. Die Ruhelage 11 ist in Fig. 7 und die Sicherungslage 12 ist in Fig. zu erkennen, wobei die beiden Lagen durch einen Linearantrieb 38 bewirkt werden, das Trittelement 900 standfest auf- und zurückschwenken.

Das Schwenklager 34 ist -wie in Fig. 8 zu erkennen- am Trittelement 90 vorgesehen, das selbst ein bewegliches Trittelement 90 darstellt. Das erste bewegliche Trittelement 90 ist nämlich an einer zweiten Führung 115, hier als Schwalbenschwanzführung ausgeführt, gelagert, um dieses erste bewegliche Trittelement 90 gerade vor- und zurückführen zu können. Die Führung 115 ist mit seinen Führungselementen 117 bzw. 118 an einem Trittelementträger 37 bzw. an einem Schlitten 36 befestigt, der entlang einer Schlittenführung 35 der Werkzeugmaschine 1 beweglich gelagert ist.

Diese Schlittenführung 35 verläuft in Längsrichtung der Werkzeugmaschine 1, sodass die beweglichen Trittelemente 90, 900 je nach Bedarf längs der Werkzeugmaschine 1 verstellt werden können. Dies ist bei besonders breiten Zugangsöffnungen 6 von Vorteil, weil trotz dieser Breite mit schmäleren beweglichen Trittelementen 90, 900 ein Auslangen gefunden werden kann. Entsprechend der Lage des Schlittens 36 können damit schmälere bewegliche Trittelemente 90, 900 an das jeweilige ortsfeste Trittelement 19 bzw. an ein ortsfestes Trittelement 19 anschließen, welche ortsfestes Trittelement 19 sich vorzugsweise über die gesamte Breite der Zugangsöffnung 6 erstrecken.

Im Allgemeinen wird erwähnt, dass das nach Fig. 8 das Schwenklager 34 beispielsweise zwischen Trittelement 90 und Trittelement 900 vorgesehen ist. Selbstverständlich ist vorstellbar, was nicht näher dargestellt worden ist, dass das zweite bewegliche Trittelement 900 über das Schwenklager 34 direkt am Schlitten 36 oder auch direkt am ortsfesten Trittelement 19 befestigt ist.

Ein weiterer Unterschied des Trittbodens 80 zum anderen Ausführungsbeispiel ist im Geländer 24 zu erkennen. Dieses weist nämlich einen vorne am beweglichen ersten Trittelement 90 seitlich gelagerten Geländerträger 133 auf. An diesem Geländerträger 133 steht ein längenverstellbarer Handlauf 128 zur Ausbildung einer vorderen Absturzsicherung ab. Diese Längenverstellung ist dahingehend günstig, das unter Verbindung des Handlaufs 128 mit einem biegeweichen Zugelement 31 eine seitliche Absturzsicherung mitausgebildet werden kann. Die normal in Trittbodenlängsrichtung einstellbare Ausfahrlänge des Handlaufs 128 kann nämlich je nach Bedarf der gewünschten Breite des Trittbodens 80 angepasst werden.

Im Falle dass nun je ein biegeweiches Zugelement 31 an den beiden Enden des Handlaufs 128 vorgesehen ist, kann beidseitig des Trittbodens 80 eine seitliche Absturzsicherung und durch den Handlauf 128 selbst eine vordere Absturzsicherung ausbildet werden. Hierzu sind die biegweichen Zugelemente 31 an je einer der parallelen vorderen Stützen 39 endbefestigt, die vom Schlitten 36 über den Trittboden 80 hinausragen. Mithilfe eines Verschwenkens des Handlaufs 128 und/oder eines Verschwenkens des Geländerträgers 133 können die biegweichen Zugelemente 31 gespannt werden. Der Geländerträger 133 ist am Trittelementträger 37 über ein zweites Schwenklager 25 befestigt, was nicht näher dargestellt worden ist. Vorzugsweise kann das erste Schwenklager 35 auch zur Ausbildung des zweiten Schwenklagers 25 verwendet werden, was nicht näher dargestellt worden ist.

## Patentansprüche

1. Werkzeugmaschine zur Bearbeitung eines Werkstücks (3) mit einem Arbeitsraum (4) zur Aufnahme des zu bearbeitenden Werkstücks (3), mit einem Maschinenbett (2) und mit mindestens einer Schutzabtrennung (5), die den Arbeitsraum (4) zumindest bereichsweise begrenzt und wenigstens eine verschließbare Zugangsöffnung (6) zum Arbeitsraum (4) aufweist, und mit mindestens einem im Arbeitsraum (4) vorgesehenen Trittboden (8, 80), der mindestens ein im Arbeitsraum (4) bewegliches Trittelement (9, 90, 900) aufweist, **dadurch gekennzeichnet, dass** sich der Trittboden (8, 80) vom Boden (10) der Zugangsöffnung (6) ausgehend im Arbeitsraum (4) erstreckt und über dessen bewegliches Trittelement (9, 90, 900) von einer zurückgezogenen Ruhelage (11) in eine dazu weiter in den Arbeitsraum (4) vorstehende Sicherungslage (12) verlagerbar ist.

2. Werkzeugmaschine nach Anspruch 1, **dadurch gekennzeichnet, dass** der Trittboden (8, 80) in den Arbeitsraum (4) auskragt.

3. Werkzeugmaschine nach Anspruch 1 oder 2, **dadurch gekennzeichnet, dass** sich der Trittboden (8, 80) vom Boden (10) der Zugangsöffnung (6) mit mindestens einem ortsfesten Trittelement (19) ausgehend im Arbeitsraum (4) erstreckt, an welches ortsfeste Trittelement (19) das bewegliche Trittelement (9, 90, 900) anschließt.

4. Werkzeugmaschine nach Anspruch 1, 2 oder 3, **dadurch gekennzeichnet, dass** die Werkzeugmaschine (1) vor der Zugangsöffnung (6) in den Arbeitsraum (4) ein Podest (14) mit einem Träger (13) aufweist, an dem der Trittboden (8, 80) befestigt ist.

5. Werkzeugmaschine nach Anspruch 3 oder 4, **dadurch gekennzeichnet, dass** das ortsfeste Trittelement (19) an dessen in den Arbeitsraum (4) auskragenden Ende (21) über eine Abstützung (23) mit dem Podest (14) verbunden ist.

6. Werkzeugmaschine nach einem der Ansprüche 1 bis 5, **dadurch gekennzeichnet, dass** der Trittboden (8, 80) eine Führung (15, 115), insbesondere Linearführung, mit Führungselementen (17, 117) aufweist, an denen ein erstes bewegliches Trittelement (9, 90) zu dessen Verlagerung befestigt ist.

7. Werkzeugmaschine nach Anspruch 6, **dadurch gekennzeichnet, dass** die Führung (15, 115) für das erste bewegliche Trittelement (9, 90) unterhalb eines ortsfesten Trittelements (19) des Trittbodens (8, 80) vorgesehen ist.

8. Werkzeugmaschine nach Anspruch 6 oder 7, **dadurch gekennzeichnet, dass** sowohl die Führung (14) mit ihrem ortsfesten Führungselement (18) als auch das ortsfeste Trittelement (19) über zumindest ein gemeinsames Tragprofil (20) am Podest (14) befestigt sind.

9. Werkzeugmaschine nach einem der Ansprüche 1 bis 8, **dadurch gekennzeichnet, dass** mehrere nebeneinander angeordnete Trittböden (8) einen segmentierten Boden (30) im Arbeitsraum (4) ausbilden.

10. Werkzeugmaschine nach einem der Ansprüche 1 bis 7, **dadurch gekennzeichnet, dass** der Trittboden (80) ein erstes Schwenklager (34) aufweist, an das ein zweites bewegliches Trittelement (900) zu dessen Verlagerung befestigt ist.

11. Werkzeugmaschine nach Anspruch 10, **dadurch gekennzeichnet, dass** das erste Schwenklager (34) zwischen dem ersten beweglichen Trittelement (90) und dem zweiten beweglichen Trittelement (900) vorgesehen ist.

12. Werkzeugmaschine nach einem der Ansprüche 1 bis 11, **dadurch gekennzeichnet, dass** die Werkzeugmaschine entlang deren Längsrichtung eine Schlittenführung (35) aufweist und dass der Trittboden (80) einen an der Schlittenführung (35) geführten Schlitten (36) aufweist, an dem das bewegliche Trittelement (90, 900) befestigt ist.

13. Werkzeugmaschine nach einem der Ansprüche 1 bis 12, **dadurch gekennzeichnet, dass** der Trittboden (8, 80) ein Geländer (24) aufweist, das am beweglichen ersten Trittelement (9, 90) über mindestens ein zweites Schwenklager (25) befestigt ist.

14. Werkzeugmaschine nach Anspruch 13, **dadurch gekennzeichnet, dass** das Geländer (24) einen vorne am beweglichen ersten Trittelement (9) mittig gelagerten Geländerträger (33) und davon seitlich abstehende und längenverstellbare Handläufe (28, 29) zur Ausbildung einer vorderen Absturzsicherung aufweist.

15. Werkzeugmaschine nach Anspruch 13, **dadurch gekennzeichnet, dass** das Geländer (24) einen vorne am beweglichen ersten Trittelement (90) seitlich gelagerten Geländerträger (133) und mindestens einen davon seitlich abstehenden und längenverstellbaren Handlauf (128) zur Ausbildung einer vorderen Absturzsicherung aufweist.

## Claims

1. A machine tool for machining a workpiece (3), comprising a working space (4) for receiving the workpiece (3) to be machined, a machine bed (2) and at least one protective separation (5) which delimits the working space (4) at least in sections and comprises at least one closable access opening (6) to the working space (4), and comprising at least one tread floor (8, 80) which is provided in the working space (4) and which has at least one tread element (9, 90, 900) which is movable in the working space (4), **characterized in that** the tread floor (8, 80) extends into the working space (4) outwards from the floor (10) of the access opening (6) and, via its mobile tread element (9, 90, 900), extends from a retracted rest position (11) into a securing position (12) projecting further into the working space (4).

2. A machine tool according to claim 1, **characterized in that** the tread floor (8, 80) projects into the working space (4).

3. A machine tool according to claim 1 or 2, **characterized in that** the tread floor (8, 80) extends from the floor (10) of the access opening (6) with at least one stationary tread element (19) into the working space (4), with the movable tread element (9, 90, 900) adjoining said stationary tread element (19).

4. A machine tool according to claim 1, 2 or 3, **characterized in that** the machine tool (1) has a pedestal (14) with a carrier (13) in front of the access opening (6) into the working space (4), on which the tread floor (8, 80) is fastened.

5. A machine tool according to claim 3 or 4, **characterized in that** the stationary tread element (19) is connected to the pedestal (14) via a support (23) at its end (21) projecting into the working space (4).

6. A machine tool according to one of the claims 1 to 5, **characterized in that** the tread floor (8, 80) has a guide (15, 115), more particularly a linear guide, with guide elements (17, 117), on which a first movable tread element (9, 90) is fastened for its displacement.

7. A machine tool according to claim 6, **characterized in that** the guide (15, 115) for the first movable tread element (9, 90) is provided below a stationary tread element (19) of the tread floor (8, 80).

8. A machine tool according to claim 6 or 7, **characterized in that** both the guide (14) with its stationary guide element (18) and also the stationary tread element (19) are fastened to the pedestal (14) via at least one common support profile (20).

9. A machine tool according to one of the claims 1 to 8, **characterized in that** a plurality of tread floors (8) arranged next to one another form a segmented floor (30) in the working space (4).

10. A machine tool according to one of the claims 1 to 7, **characterized in that** the tread floor (80) comprises a first pivot bearing (34), on which a second movable tread element (900) is fastened for its displacement.

11. A machine tool according to claim 10, **characterized in that** the first pivot bearing (34) is provided between the first movable tread element (90) and the second movable tread element (900).

12. A machine tool according to one of the claims 1 to 11, **characterized in that** the machine tool has a slide guide (35) along its longitudinal direction, and that the tread floor (80) has a slide (36) guided on the slide guide (35), on which the movable tread element (90, 900) is fastened.

13. A machine tool according to one of the claims 1 to 12, **characterized in that** the tread floor (8, 80) has a railing (24) which is fastened to the movable first tread element (9, 90) via at least one second pivot bearing (25).

14. A machine tool according to claim 13, **characterized in that** the railing (24) has a railing support (33) which is mounted centrally at the front on the movable first tread element (9) and handrails (28, 29) projecting laterally therefrom and longitudinally adjustable to form a front fall-preventing device.

15. A machine tool according to claim 13, **characterized in that** the railing (24) has a railing support (133) which is mounted laterally at the front on the movable first tread element (90) and at least one handrail (128) projecting laterally therefrom and longitudinally adjustable to form a front fall-preventing device.

## Revendications

1. Machine-outil pour l'usinage d'une pièce d'oeuvre (3) avec un espace de travail (4) destiné à recevoir la pièce d'oeuvre à usiner (3), avec un plateau de machine (2) et avec au moins une cloison de protection (5) qui délimite au moins en partie l'espace de travail (4) et présente au moins une ouverture d'accès (6) refermable vers l'espace de travail (4), et avec au moins une passerelle (8, 80) prévue dans l'espace de travail (4), qui présente au moins un élément de marchepied (9, 90, 900) mobile dans l'espace de travail (4), **caractérisée en ce que** la passerelle (8, 80) s'étend dans l'espace de travail (4) à partir du fond (10) de l'ouverture d'accès (6) et peut être déplacée par l'intermédiaire de son élément de marchepied mobile (9, 90, 900) d'une position de repos rétractée (11) à une position de sûreté (12) avancée plus loin dans l'espace de travail (4).

2. Machine-outil selon la revendication 1, **caractérisée en ce que** la passerelle (8, 80) s'évase dans l'espace de travail (4).

3. Machine-outil selon la revendication 1 ou 2, **caractérisée en ce que** la passerelle (8, 80) s'étend dans l'espace de travail (4) à partir du fond (10) de l'ouverture d'accès (6) avec au moins un élément de marchepied fixe (19), l'élément de marchepied mobile (9, 90, 900) se raccordant à cet élément de marchepied fixe (19).

4. Machine-outil selon la revendication 1, 2 ou 3, **caractérisée en ce que** la machine-outil (1) présente à partir de l'ouverture d'accès (6) dans l'espace de travail (4) une estrade (14) avec un support (13) sur lequel la passerelle (8, 80) est fixée.

5. Machine-outil selon la revendication 3 ou 4, **caractérisée en ce que** l'élément de marchepied fixe (19) est relié à l'estrade (14) par l'intermédiaire d'un support (23) à son extrémité (21) évasée dans l'espace de travail (4).

6. Machine-outil selon l'une des revendications 1 à 5, **caractérisée en ce que** la passerelle (8, 80) présente un guidage (15, 115), en particulier un guidage linéaire, avec des éléments de guidage (17, 117) sur lesquels un premier élément de marchepied mobile (9, 90) est fixé pour se déplacer.

7. Machine-outil selon la revendication 6, **caractérisée en ce que** le guidage (15, 115) pour le premier élément de marchepied mobile (9, 90) est prévu en dessous d'un élément de marchepied fixe (19) de la passerelle (8, 80).

8. Machine-outil selon la revendication 6 ou 7, **caractérisée en ce que** le guidage (14) avec son élément de marchepied fixe (18) et l'élément de marchepied fixe (19) sont fixés à l'estrade (14) par l'intermédiaire d'un profilé portant commun (20).

9. Machine-outil selon l'une des revendications 1 à 8, **caractérisée en ce que** plusieurs passerelles (8) disposées les unes à côté des autres forment un plancher segmenté (30) dans l'espace de travail (4).

10. Machine-outil selon l'une des revendications 1 à 7, **caractérisée en ce que** la passerelle (80) présente un premier palier pivotant (34) sur lequel un deuxième élément de marchepied mobile (900) est fixé pour se déplacer.

11. Machine-outil selon la revendication 10, **caractérisée en ce que** le premier palier pivotant (34) est prévu entre le premier élément de marchepied mobile (90) et le deuxième élément de marchepied mobile (900).

12. Machine-outil selon l'une des revendications 1 à 11, **caractérisée en ce qu'**elle présente une guidage de chariot (35) le long de sa longueur et **en ce que** la passerelle (80) présente un chariot (36) guidé sur le guidage de chariot (35), sur lequel l'élément de marchepied mobile (90, 900) est fixé.

13. Machine-outil selon l'une des revendications 1 à 12, **caractérisée en ce que** la passerelle (8, 80) présente un garde-corps (24) qui est fixé au premier élément de marchepied mobile (9, 90) par l'intermédiaire d'au moins un deuxième palier pivotant (25).

14. Machine-outil selon la revendication 13, **caractérisée en ce que** le garde-corps (24) présente un support de garde-corps (33) supporté sur l'avant et au milieu sur le premier élément de marchepied mobile (9) et des mains courantes (28, 29) qui s'en écartent latéralement et dont la longueur est réglable pour former une sécurité contre les chutes sur l'avant.

15. Machine-outil selon la revendication 13, **caractérisée en ce que** le garde-corps (24) présente un support de garde-corps (133) supporté latéralement sur le premier élément de marchepied mobile (90) et au moins une main courante (128) qui s'en écarte latéralement et dont la longueur est réglable pour former une sécurité contre les chutes sur l'avant.
